## Europäisches Patentamt
## European Patent Office
## Office européen des brevets

(19)

(11) Numéro de publication: **0 063 991**
**B2**

(12) **NOUVEAU FASCICULE DE BREVET EUROPÉEN**

(45) Date de publication du nouveau fascicule du brevet:
21.06.89

(51) Int. Cl.⁴: **B 30 B 9/10,** B 01 D 33/04

(21) Numéro de dépôt: 82400659.7

(22) Date de dépôt: 13.04.82

(54) Installation de filtration à coursiers passant entre des plateaux de serrage.

(30) Priorité: 13.04.81 FR 8107372

(43) Date de publication de la demande:
03.11.82 Bulletin 82/44

(45) Mention de la délivrance du brevet:
09.07.86 Bulletin 86/28

(45) Mention de la decision concernant l'opposition:
21.06.89 Bulletin 89/25

(84) Etats contractants désignés:
AT BE CH DE GB IT LI LU NL SE

(56) Documents cité:
CH-A-538 296
DE-A-1 461 500
DE-A-2 064 315
DE-A-2 550 956
DE-A-2 717 971
DE-A-2 854 168
DE-A-2 923 891
FR-A-2 389 401
US-A-4 168 236

(73) Titulaire: **SOCIETE GUINARD DE SEPARATION**
**Société dite:, 18, rue Gounod, F-92210 Saint-Cloud (FR)**

(72) Inventeur: **Prunier, Robert, La Morinière, F-6100 Le Mele Sur Sarthe (FR)**

(74) Mandataire: **Flechner, Willy, CABINET FLECHNER**
**22, Avenue de Friedland, F-75008 Paris (FR)**

EP 0 063 991 B2

LIBER, STOCKHOLM 1989

**Description**

La présente invention se rapporte aux machines de filtration, destinées à exprimer du liquide de suspensions, telles que les boues liquides des stations d'épurations des eaux résiduaires urbaines ou industrielles et, d'une manière générale, à séparer les matières solides du liquide d'une suspension.

Au US-A-4 168 236, on décrit une machine de filtration comprenant deux coursiers-tamis parallèles entre eux sur un brin, puis s'écartant l'un de l'autre sur le brin restant, et un dispositif d'alimentation en produit à traiter disposant le produit entre les coursiers-tamis. Le pressage de même que l'alimentation a lieu de manière continue.

Au FR-A-2 389 401, on décrit une machine de filtration comprenant deux coursiers-tamis parallèles entre eux sur un brin, puis s'écartant l'un de l'autre sur le brin restant, et un dispositif d'alimentation en produit à traiter disposant le produit entre les coursiers-tamis. Ceux-ci sont immobilisés temporairement entre des plateaux et donc à fonctionnement nécessairement discontinu. L'alimentation peut, cependant, s'effectuer en continu à l'aide d'un entonoir d'admission. Mais le stockage de la suspension dans l'entonoir d'admission formé par les coursiers-tamis eux-mêmes, pendant la durée d'immobilisation de ces coursiers-tamis, donne une suspension qui n'est pas homogène, la zone inférieure de l'entonoir étant plus concentrée en matière sèche que la partie supérieure. Il en résulte une mauvaise répartition de la matière sèche lors du passage entre les plateaux. En outre, à la base de l'entonoir, se trouvera une suspension égouttée relativement résistante qui obligera à tirer fortement sur les coursiers-tamis et qui peut détériorer ou même arracher les joints d'étanchéité latéraux à la sortie des plateaux. Enfin, pendant le déplacement des coursiers-tamis contenant la suspension égouttée entre les plateaux écartés, les coursiers-tamis frottent sur les surfaces cannelées des plateaux, ce qui use tant les coursiers-tamis que les surfaces cannelées.

L'invention vise donc une machine du type selon FR-A-2 389 401, qui permet de déposer en continu une suspension sur l'un des coursiers-tamis, tout en ayant une suspension déposée en une couche régulière et homogène et sans avoir à redouter les phénomènes d'usure mentionnés ci-dessus.

L'invention a pour objet une machine de filtration telle que définie à la revendication principale.

On conserve ainsi, la continuité de l'alimentation tout en déposant une couche régulière et homogène de suspension sur l'un des coursiers-tamis.

Suivant un perfectionnement, il y a plusieurs couples de plateaux parallèles entre lesquels passent successivement des portions du brin parallèle, et le mécanisme de rapprochement et d'éloignement des plateaux est commun à tous les plateaux, de sorte que le serrage de diverses portions a lieu simultanément. On peut, néanmoins, régler différemment la force de serrage suivant les couples de plateaux, en interposant des éléments élastiques entre les plateaux ou en les incorporant aux plateaux et par exemple serrer aussi davantage une portion en aval d'une portion en amont.

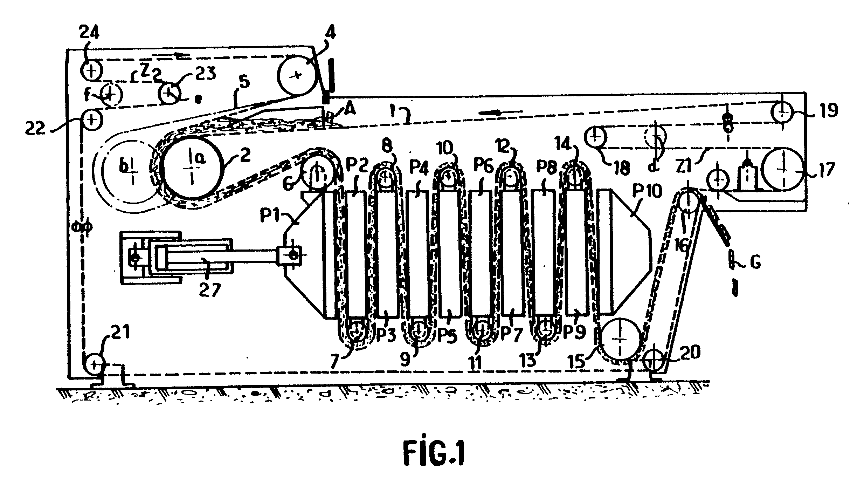

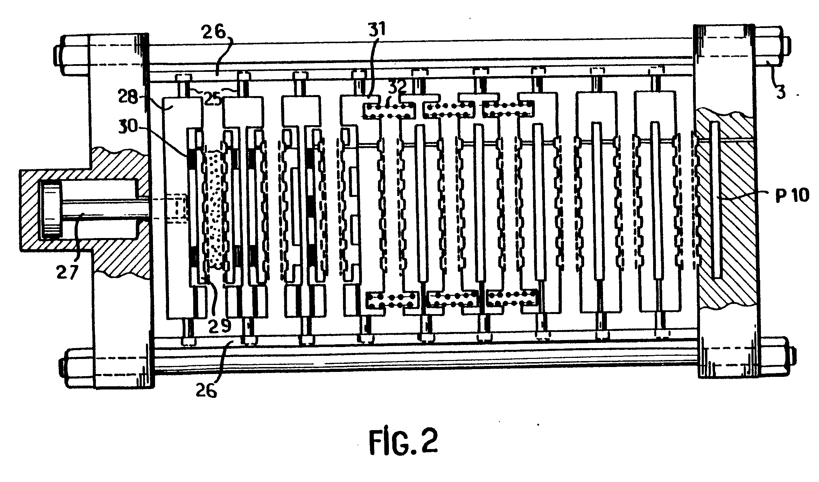

La figure 1 est une vue en élévation d'une installation suivant l'invention et la figure 2 en est une vue partielle en plan.

L'installation comprend un dispositif d'alimentation (non représenté) classique, permettant d'obtenir en continu une pâte ayant une consistance en permettant le pressage entre deux bandes-tamis sans tuer au-delà des rives de celles-ci.

La pâte A égouttée est reçue sur un coursier-tamis 1 en amont, suivant le sens de déplacement du coursier 1 sans fin, d'un tambour 2 d'axe horizontal, monté sur les parois latérales du bâti 3 de l'installation, comme tous les autres rouleaux de l'installation, mais susceptible comme tous les autres rouleaux tendeurs et à la différence des rouleaux, d'avoir un mouvement de translation horizontale.

D'un rouleau 4 moteur en amont du tambour 2, un autre coursier-tamis 5 vient passer au-dessus du coursier 1 autour du tambour 2 en emprisonnant la pâte entre eux.

Les coursiers 1 et 5 continuent leur course en restant parallèles, en passant sur un rouleau 6 donnant à la portion immédiatement en aval une direction verticale descendante, sur un rouleau 7, donnant à la portion immédiatement en aval une direction verticale ascendante, puis de même sur des rouleaux 8 à 14, avant de ressortir d'un rouleau 15 moteur suivant une portion inclinée pour passer sur un rouleau 16 où les deux coursiers 1 et 5 se séparent et cessent d'être parallèles. Le coursier 1 passe sur un rouleau 17, puis sur un rouleau tendeur 18 avant d'être renvoyé, par un rouleau 19, sous le dispositif d'alimentation. Le coursier 5 passe sur des rouleaux 20, 21, 22 et sur un rouleau tendeur 25 avant d'arriver au rouleau 4 par un rouleau 24. Le gâteau G formé par la pâte essorée est libéré par les coursiers 1, 5.

Les portions verticales des coursiers 1, 5 comprises entre les rouleaux 7 à 15, passent respectivement entre des couples de plateaux P1 à P10, dont la surface est rainurée et perforée. Les plateaux P sont montés par des tenons 25 latéraux à roulement sur des chemins 26 de roulement du bâti 3, à l'exception du plateau P10 qui est fixé en butée sur le bâti J. Le plateau P1 est solidaire de la tige horizontale d'un vérin 27.

Chaque plateau comprend un encadrement 28 et une plaque 29 de pression.

Le vérin transmet toute la force de serrage sur le sandwich constiué par les coursiers 1 et 5 qui emprisonnent la pâte à presser. Entre les

plateaux P1/P2, P2/P3 et P3/P4, la pâte ne pouvant supporter sans tuer toute la force de serrage, les plaques de pression prennent appui sur le sandwich avec seulement une pression résultant de l'écrasement de pots élastiques 30 interposés entre l'encadrement 28 et la plaque 29, les plateaux venant en appui les uns sur les autres, par les parties 31 de leur encadrement. Entre les plateaux P4/P5, P5/P6 et P6/P7, la pâte commence à pouvoir supporter sans tuer, une pression moyenne. Les plaques 29 de pression sont solidaires des encadrements sans interposition de pots élastiques. Pour limiter la pression sur le sandwich, une partie de la force de serrage du vérin 27 est contrariée par des ressorts 32 de compression, disposés dans les parties 31 latérales des faces d'appui des plateaux. Enfin, entre les plateaux P7/P8, P8/P9 et P9/P10, le sandwich de pâte, très essoré, supporte le pressage maximal, égal à la force de serrage du vérin 27.

Le programme des phases d'un cycle, soit:

a) serrage des plateaux,

b) maintien du serrage pendant le temps de pressage,

c) écartement des plateaux,

est obtenu par l'action d'une came calée sur l'arbre du tambour moteur 4, cette came actionnant le distributeur de l'alimentation hydraulique du vérin 27.

Le déplacement rapide, sur une longueur égale à la hauteur des plateaux des coursiers 1, 5, après l'écartement des plateaux par le tambour moteur 15, est autorisé par un détecteur de position "presse ouverte" placé sur le plateau P1.

Le tambour d'entraînement 4 est lié à son arbre moteur par un système à roue libre, l'entraînement des coursiers 1, 5 par le tambour 15 étant prépondérant.

Le déplacement en translation horizontale des rouleaux tendeurs 2, 18 et 23 peut être réalisé par des systèmes à câbles ou chaînes, roues de renvoi et contrepoids.

L'opération de pressage du sandwich, par la poussière du vérin V sur l'empilage des plateaux P1 à P10, immobilise les coursiers pendant un temps "t". Pendant le temps "t" de pressage, le tambour perforé 2 se déplace de a à b, absorbant ainsi les longueurs des coursiers-tamis 1, 5, qui, sinon, s'accumuleraient en amont, ces longueurs étant restituées par les boucles Z1 et Z2 formées par les tambours 18 et 23, qui se déplacent de c à d et de e à f. Quand le temps de pressage "t" est écoulé, les plateaux P s'écartent, le tambour moteur 4 entraîne le sandwich d'une longueur égale à la hauteur des plateaux. Les boucles Z1 et Z2 se reforment par le déplacement des tambours 18 et 23 de d en c, et de f en e. Le temps total de pressage "T" est égal au produit de t x par le nombre de portions verticales du brin parallèle. Il suffit d'ajouter un plateau de pressage pour augmenter "T" de la valeur de "t". Les coursiers ne sont soumis en extension qu'à l'effort résultant de la somme de l'effort dû au déplacement du sandwich, de l'effort dû à la flexion du sandwich lors des changements de direction, et de l'effort dû à la tension initiale nécessaire à l'adhérence sur les rouleaux 4, 15 moteurs. La pression de filtration ne dépend plus que de la force de serrage des plateaux P. Un serrage par vérin hydraulique "V" permet d'atteindre des valeurs très élevées quand cela est nécessaire.

**Revendications**

1. Machine de filtration, comprenant deux coursiers-tamis (1, 5), parallèles entre eux sur un brin, puis s'écartant l'un de l'autre sur le brin restant, au moins un couple de plateaux (P1 à P10) en regard entre lesquels passent le brin parallèle, un mécanisme (27) de rapprochement temporaire des plateaux (P1 à P10) l'un vers l'autre jusqu'à serrer les coursiers (1, 5) l'un vers l'autre pendant une immobilisation correspondante de ces derniers sur leurs trajets et un dispositif d'alimentation en produit à traiter disposant le produit entre les coursiers-tamis (1, 5), caractérisé en ce que le dispositif d'alimentation est disposé et agencé de manière à déposer le produit en continu sur l'un des coursiers qui est horizontal ou qui est peu incliné à cet endroit d'alimentation lequel est disposé sur le brin restant en amont d'un rouleau (2) autour duquel les deux coursiers viennent s'enrouler en emprisonnant la pâte entre eux avant qu'ils n'entrent dans les plateaux (P1 à P10) et la machine comprend un premier dispositif (2) destiné à augmenter, à l'instant où le mécanisme (27) immobilise les coursiers en les serrant, le trajet des coursiers (1, 5) entre l'endroit d'alimentation et celui où ils passent entre le couple de plateaux, et deux dispositifs (18, 23) destinés, à ce même instant, à diminuer le trajet de chaque coursier entre l'endroit où ils s'écartent l'un de l'autre et celui d'alimentation de manière à compenser les longueurs de coursier-tamis entre lesdits endroits qui se produisent pendant l'immobilisation.

2. Machine de filtration suivant la revendication 1, caractérisée en ce que les dispositifs comprennent un tambour sur lequel passent les deux coursiers (1, 5) et qui peut se déplacer suivant une composante de déplacement parallèle à la direction d'entrée des coursiers sur le tambour.

3. Machine de filtration suivant la revendication 1, caractérisée par une programmation des cycles de l'actionnement du mécanisme (27) à partir de l'arbre moteur du tambour (4) d'entraînement de l'un des coursiers (5).

4. Machine de filtration suivant la revendication 1, comprenant plusieurs couples de plateaux (P1 à P10) en regard entre lesquels passent le brin parallèle, un mécanisme (27) de rapprochement temporaire des deux plateaux (P1 à P10) de chaque couple l'un vers l'autre, commun à tous les plateaux et des moyens élastiques pour régler différemment la force de serrage suivant les couples de plateaux (P1 à P10), caractérisée en ce que les moyens élastiques de la force de serrage comprennent des éléments (30, 32) élastiques interposés entre les plateaux (P1 à P10).

5. Machine de filtration suivant la revendication 4, caractérisée en ce que les premiers éléments (30) élastiques de réglage de la force de serrage sont incorporés dans les faces en regard des plateaux (P1 à P3) d'un couple.

6. Machine de filtration suivant la revendication 4, caractérisée en ce que les seconds éléments (32) élastiques de réglage de la force de serrage sont interposés entre les faces en regard de plateaux (P4 à P7) de couples adjacents.

7. Machine de filtration suivant les revendications 5 et 6, caractérisée en ce que les premiers éléments (30) élastiques de réglage sont incorporés aux plateaux (P1 à P3) se trouvant en amont, suivant le sens de déplacement des coursiers-tamis (1, 5) des couples de plateaux (P4 à P7) entre lesquels sont interposés les seconds éléments (32) élastiques de réglage.

8. Machine de filtration suivant la revendication 4, caractérisée en ce que dans les derniers couples de plateaux (P7 à P10) les faces en regard de deux couples adjacents viennent directement en contact.


**Patentansprüche**

1. Filtereinrichtung, umfassend zwei Siebbänder (1, 5), die auf einen Trum parallel zueinander verlaufen und sich dann auf dem Resttrum voneinander entfernen, mindestens ein Paar sich gegenüberliegender Platten (P1 bis P10) zwischen denen das parallele Trum durchläuft, eine Vorrichtung (27) zur zeitweisen Zustellung der Platten (P1 bis P10) gegeneinander bis zum Zusammenpressen der Bänder (1, 5) während eines entsprechenden Stillsetzens der letzteren auf ihrem Weg und eine Vorrichtung zur Beschickung mit dem zu behandelnden Gut, die das Gut zwischen die Siebbänder (1, 5) einbringt, dadurch gekennzeichnet, daß die Beschickungsvorrichtung so angeordnet und eingerichtet ist, daß sie das Gut fortlaufend auf eines der Bänder aufgibt, das horizontal oder das wenig zur Beschickungsstelle geneigt ist, die sich auf dem Resttrum vor einer Walze (2) befindet, um die die beiden Bänder sich dann herumschlingen, indem sie die Masse zwischen sich einschließen, bevor sie zwischen die Platten (P1 bis P10) einlaufen, und daß die Einrichtung eine erste Vorrichtung (2) umfaßt, die in dem Augenblick, in dem die Vorrichtung (27) die Bänder unter Pressung stillsetzt, die Strecke der Bänder (1, 5) zwischen dem Beschickungsbereich und dem Bereich, in dem sie zwischen das Plattenpaar einlaufen, verlängert, und zwei Vorrichtungen (18, 23), die im gleichen Augenblick die Strecke jedes Bandes zwischen dem Bereich, in dem sie sich voneinander entfernen, und dem Beschickungsbereich verkürzen, um so die sich während der Stillsetzung ergebenden Längen der Siebbänder zwischen den genannten Bereichen auszugleichen.

2. Filtereinrichtung nach Anspruch 1, dadurch gekennzeichnet, daß die Vorrichtungen eine Trommel umfassen, über die die beiden Bänder (1, 5) laufen und die sich gemäß einer Verschiebungskomponente parallel zur Richtung des Einlaufs der Bänder auf die Walze verschieben kann.

3. Filtereinrichtung nach Anspruch 1, gekennzeichnet durch eine Programmierung der Arbeitszyklen der Vorrichtung (27) ab der Antriebswelle der Mitnahmetrommel (4) eines der Bänder (5).

4. Filtereinrichtung nach Anspruch 1, umfassend mehrere Paare sich gegenüberliegender Platten (P1 bis P10), zwischen denen das parallele Trum durchläuft, eine allen Platten gemeinsame Vorrichtung (27) zur zeitweisen Zustellung der beiden Platten (P1 bis P10) jedes Paares gegeneinander und elastische Mittel zur unterschiedlichen Regelung des Preßdrucks gemäß den Plattenpaaren (P1 bis P10), dadurch gekennzeichnet, daß die elastischen Preßdruckmittel elastische Elemente (30, 32) umfassen, die zwischen den Platten (P1 bis P10) eingefügt sind.

5. Filtereinrichtung nach Anspruch 4, dadurch gekennzeichnet, daß die ersten elastischen Elemente (30) zur Regelung des Preßdrucks den sich gegenüberliegenden Stirnflächen der Platten (P1 bis P3) eines Paares eingegliedert sind.

6. Filtereinrichtung nach Anspruch 4, dadurch gekennzeichnet, daß die zweiten elastischen Elemente (32) zur Regelung des Preßdrucks zwischen den sich gegenüberliegenden Stirnflächen von Platten (P4 bis P7) benachbarter Paare eingefügt sind.

7. Filtereinrichtung nach den Anprüchen 5 und 6, dadurch gekennzeichnet, daß die ersten elastischen Regelelemente (30) den Platten (P1 bis P3) eingegliedert sind, die sich, in Bewegungsrichtung der Siebbänder (1, 5) gesehen, vor den Plattenpaaren (P4 bis P7) befinden, zwischen denen die zweiten elastischen Regelemente (32) eingefügt sind.

8. Filtereinrichtung nach Anspruch 4, dadurch gekennzeichnet, daß bei den letzten Plattenpaaren (P7 bis P10) die sich gegenüberliegenden Stirnflächen von zwei benachbarten Paaren direkt in Berührung kommen.


**Claims**

1. A filtering machine comprising two filter belts (1, 5) transported in parallel to each other for part of their path of travel, then moving apart from one another for the remaining part; at least one pair of plates (P1 to P10) facing each other, between which passes the parallel section; a mechanism (27) for bringing the plates (P1 to P10) temporarily towards each other to press the belts (1, 5) together while they are immobilized on their path and a device for supplying the product to be treated by depositing it between the filter belts (1, 5), characterized in that the feed device is arranged and adjusted in such a way that it deposits the product continuously on one of the belts which is horizontal or only slightly inclined at the feed site, the feed site being arranged on the remaining section upstream of a roller (2) around which the two belts run, entrapping the paste between them before they enter the plates (P1 to P10) and in that the machine comprises a first device (2) intended to lengthen, at the moment when the mechanism (27) immobilizes the belts by pressing them together, the path of the belts (1, 5) between the feed site and the point where they pass between the pair of plates, and two devices (18, 23) intended to shorten, at this same moment, the path of each belt between the point where they diverge and the feed site, in such a way as to compensate for the lengths of filter belt which arise between the said sites during immobilization.

2. A filtering machine according to claim 1, characterized in that the devices comprise a drum over which the two belts (1, 5) pass and which can move according to a displacement component parallel to the direction of arrival of the belts at the drum.

3. A filtering machine according to claim 1, characterized by a programming of the actuating cycles of the mechanism (27) from the drive-shaft of the drum (4) which drives one of the belts (5).

4. A filtering machine according to claim 1, comprising several pairs of plates (P1 to P10) facing each other, between which passes the parallel section; a mechanism (27) for bringing the two plates (P1 to P10) of each pair temporarily towards each other, which mechanism is common to all the plates, and elastic means for differently adjusting the pressing pressure according to the pair of plates (P1 to P10), characterized in that the elastic means of the pressing pressure comprises elastic elements (30, 32) interposed between the plates (P1 to P10).

5. A filtering machine according to claim 4, characterized in that the first elastic elements (30) for adjusting the pressing pressure are incorporated in the opposing faces of a pair of plates (P1 to P3).

6. A filtering machine according to claim 4, characterized in that the second elastic elements (32) for adjusting the pressing pressure are interposed between the opposing faces of adjacent pairs of plates (P4 to P7).

7. A filtering machine according to claims 5 and 6, characterized in that the first elastic adjusting elements (30) are incorporated in the plates (P1 to P3) located upstream, according to the direction of displacement of the filter belts (1, 5), of the pairs of plates (P4 to P7) between which are interposted the second elastic adjusting elements (32).

8. A filtering machine according to claim 4, characterized in that in the last pairs of plates (P7 to P10) the opposing faces of two adjacent pairs come into direct contact with each other.

FIG.1

EP 0 063 991 B2

FIG.2

EP 0 063 991 B2